# EUROPEAN PATENT APPLICATION

(11) **EP 4 699 442 A1**
(43) Date of publication of application: **25.02.2026**
(21) Application number: 24195178.9
(22) Date of filing: 19.08.2024
(51) Int. Cl.: A01N 25/04, A01N 39/04, A01N 47/36, A01P 13/02

(54) **HERBICIDE COMPOSITION AND METHOD FOR PREPARING THEREOF**

(71) Applicant: Pestila Sp. z o.o., 97-320 Wolbórz (PL)
(72) Inventor: Szalajdewicz, Andrzej, 37-310 Nowa Sarzyna (PL); Filip, Waldemar Maciej, 37-310 Nowa Sarzyna (PL)
(74) Representative: JWP Patent & Trademark Attorneys

(57) **Abstract**

The subject-matter of the invention is a herbicide composition in the form of an oil suspension for dilution with water intended for the control of annual and perennial plants comprising 2-ethylhexyl 2,4-dichlorophenoxyacetate, a sodium salt of methyl 4-iodo-2-[3-(4-methoxy-6-methyl-1,3,5-triazin-2-yl)ureidosulfonyl]benzoate (iodosulfuron-methyl-sodium), characterised in that the 2-ethylhexyl 2,4-dichlorophenoxyacetate is present in an amount within the range of from 34% w/w to 37% w/w, while the sodium salt of methyl 4-iodo-2-[3-(4-methoxy-6-methyl-1,3,5-triazin-2-yl)ureidosulfonyl]benzoate (iodosulfuron-methyl-sodium) is present in an amount within the range of from 0.8 to 1.2% w/w, based on the density of the composition of 1.0453 g/ml; wherein the composition further comprises the components listed in Table 1 in the amounts indicated therein expressed in % w/w based on the density of the composition of 1.0453 g/ml. A further subject-matter of the invention is a method for preparing the herbicide composition as defined in any one of claims from 1 to 3, characterised in that it comprises the steps of: stirring rapeseed oil, 2-ethylhexyl 2,4-dichlorophenoxyacetate in an amount within the range of from 34% w/w to 37% w/w, at least one organic polysiloxane, dioctyl sodium sulfosuccinate, at least one preparation comprising ethoxylated castor oil, cloquintocet mexyl, silicon dioxide, urea, sodium salt of methyl 4-iodo-2-[3-(4-methoxy-6-methyl-1,3,5-triazin-2-yl)ureidosulfonyl]benzoate (iodosulfuron-methyl-sodium) in an amount within the range of from 0.8 to 1.2% w/w to obtain a homogeneous composition, wherein during stirring the mixture was cooled so that the temperature was lower than 35°C, then grinding the mixture in a ball mill to obtain particles with Dv (50) <2 µm at a temperature below 35°C, followed by cooling the mixture to room temperature; wherein the remaining components were mixed in amounts expressed in % w/w as specified in Table 1.

## Description

The subject-matter of the present invention is a herbicide composition comprising a combination of two active substances and a method for preparing thereof.

In the prior art, weed control compositions are known, including, but not limited to, those designed to control undesirable plants in cereals. Examples of such substances are iodosulfuron-methyl-sodium, which blocks the action of enzymes during the synthesis of amino acids, and 2,4-dichlorophenoxyacetic acid in the form of ethylhexyl ester (2,4-D), which in turn inhibits the action of plant hormones responsible for plant growth and disrupts the process of cell development. However, there is still a need to develop effective agents with herbicidal activity that would act in a multidirectional manner and combine the functions resulting from the combination of various active substances and that would allow to control such undesirable annual and perennial plants in the spring season in winter wheat, rye, winter triticale, spring wheat and spring triticale.

The aim of the invention was to develop a composition comprising iodosulfuron-methyl-sodium and ethylhexyl 2,4-dichlorophenoxyacetate suitable for use in the control of weeds found in cereals which would act in a multidirectional manner and at the same time have the lowest possible content of components to limit their impact on the environment, and at the same time enable effective control of undesirable plants. In addition, the aim of the invention was to develop a method for preparing the composition of the invention at a temperature not exceeding the range of room temperature.
The subject-matter of the invention is a herbicide composition in the form of an oil suspension for dilution with water intended for the control of annual and perennial plants comprising 2-ethylhexyl 2,4-dichlorophenoxyacetate, a sodium salt of methyl 4-iodo-2-[3-(4-methoxy-6-methyl-1,3,5-triazin-2-yl)ureidosulfonyl]benzoate (iodosulfuron-methyl-sodium), characterised in that the 2-ethylhexyl 2,4-dichlorophenoxyacetate is present in an amount within the range of from 34% w/w to 37% w/w, while the sodium salt of methyl 4-iodo-2-[3-(4-methoxy-6-methyl-1,3,5-triazin-2-yl)ureidosulfonyl]benzoate (iodosulfuron-methyl-sodium) is present in an amount within the range of from 0.8 to 1.2% w/w, based on the density of the composition of 1.0453 g/ml; wherein the composition further comprises the components listed in Table 1 in the amounts indicated therein expressed in % w/w based on the density of the composition of 1.0453 g/ml.
Preferably, the viscosity of the composition is in the range of from 339.8 to 360.7 mPas at 20°C.
Further, the subject-matter of the invention is a method for preparing the herbicide composition as defined in any one of claims from 1 to 3, characterised in that it comprises the steps of:
- stirring rapeseed oil, 2-ethylhexyl 2,4-dichlorophenoxyacetate in an amount within the range of from 34% w/w to 37% w/w, at least one organic polysiloxane, dioctyl sodium sulfosuccinate, at least one preparation comprising ethoxylated castor oil, cloquintocet mexyl, silicon dioxide, urea, sodium salt of methyl 4-iodo-2-[3-(4-methoxy-6-methyl-1,3,5-triazin-2-yl)ureidosulfonyl]benzoate (iodosulfuron-methyl-sodium) in an amount within the range of from 0.8 to 1.2 % w/w to obtain a homogeneous composition, wherein during stirring the mixture was cooled so that the temperature was lower than 35°C, then
- grinding the mixture in a ball mill to obtain particles with Dv (50) <2 µm at a temperature below 35°C, followed by
- cooling the mixture to room temperature;
wherein the remaining components were mixed in amounts expressed in % w/w as specified in Table 1.

The composition of the invention is in the form of an oil suspension for dilution with water. It retains good storage stability at 20°C. The composition comprises two active substances: iodosulfuron-methyl-sodium and 2,4-dichlorophenoxyacetic acid in the form of ethylhexyl ester (2,4-D). It should be emphasised that the composition of the invention is a herbicide with a systemic effect, taken up by the leaves and roots of weeds, and then quickly moved throughout the plant, causing its deformation and inhibition of growth, which in turn causes the entire weed to die. It is most effective against annual weeds, which are in the stage of 2-4 leaves. Weed control is achieved from 1 to 3 weeks after treatment. The speed of action of the preparation depends on the development stage of the weeds to be controlled and their growth rate, as well as the atmospheric conditions - air temperature and humidity. The composition is suitable for controlling a number of annual and perennial plants listed in the following embodiments.
The invention is illustrated by the following embodiments.

### Example 1

### Composition of the invention

The composition of the invention is in the form of an oil suspension comprising the components listed in Table 1 below.

**Table 1. Components of the composition of the invention**

| **Component** | **CAS no.** | **Trade name** | **Function** | **Components of the composition of the invention by content (g/l or g/kg)** | **% w/w *** |
|---|---|---|---|---|---|
| 2-ethylhexyl 2,4-dichlorophenoxyacetate | 1928-43-4 | 2,4-D 2 EHE | herbicide | clean 377 | clean 36.1 |
| | | 2,4-D tech. 96% | | technical 393 | technical 37.6 |
| methyl 4-iodo-2-[3-(4-methoxy-6-methyl-1,3,5-triazin-2-yl)ureidosulfonyl] benzoate, sodium salt | 144550-36-7 | iodosulfuron-methyl-sodium | herbicide | clean 10 | clean 1.0 |
| | | | | technical 11 | technical 1.1 |
| dioctyl sodium sulfosuccinate | 577-11-7 | Eucarol OD-V | wetting agent | 100 | 9.6 |
| ethoxylated castor oil | 61791-12-6 | Rokacet R26 | emulsifier | 120 | 2.9 |
| ethoxylated castor oil | 61791-12-6 | Rokacet R11 | emulsifier | 120 | 11.5 |
| cloquintocet mexyl | 99607-70-2 | cloquintocet mexyl | safener | 15 | 1.4 |
| silicon dioxide | 112926-00-8 | Thixosil 365 | anticaking agent | 15 | 1.4 |
| urea | 57-13-6 | urea | crystallisation inhibitor | 20 | 1.9 |
| mixture of organic polysiloxanes, fillers | - | Silicolapse 454 | defoamer | 0.6 | 0.1 |
| rapeseed oil | 8002-13-9 | rapeseed oil | solvent | up to 1001 | 32.6 |

| | | | | | |
|---|---|---|---|---|---|
| * based on the density of the formulation = 1.0453 g/ml | | | | | |

### Example 2

### Method for preparing the formulation of the invention

Rapeseed oil, 2-ethylhexyl 2,4-dichlorophenoxyacetate, a mixture of organic polysiloxanes (Silikolapse 454), dioctyl sodium sulfosuccinate, preparations comprising ethoxylated castor oil (Rokacet R11, Rokacet R26), cloquintocet mexyl, silicon dioxide, urea, sodium salt of methyl 4-iodo-2-[3-(4-methoxy-6-methyl-1,3,5-triazin-2-yl)ureidosulfonyl]benzoate (iodosulfuron-methyl-sodium) in the amounts indicated in Table 1 were introduced into a vessel with a stirrer. The suspension was stirred until a homogenous composition was obtained. While stirring, the mixture was cooled so that the temperature did not exceed 35°C.

The suspension was then subjected to grinding in a ball mill to obtain particles with Dv (50) <2 µm (Mastersizer analysis). The temperature was kept below 35°C during grinding.

After milling, the suspension was cooled to room temperature, subjected to appropriate analyses and packaged in containers.

The colour and state of matter of the composition of the invention were tested in accordance with the Polish Pharmacopoeia, Ed. VI (2002) and in accordance with the OPPTS Guidelines by EPA for testing the properties of a product, from 830.6302 to 04.

The tested composition is a homogeneous, beige liquid.

The dynamic viscosity tests of the composition of the invention were performed according to the procedure described in CIPAC MT 192, "Viscosity of Liquids by Rotational Viscometry"; IA/L/065, 1st edition.

The obtained results indicate an average value of dynamic viscosity at 20°C of 360.7 mPa*s for 80 RPM (spindle speed) and 339.8 mPa*s for 140 RPM (spindle speed). At 40°C, values of 173.2 mPa*s for 80 RPM and 152.8 mPa*s for 140 RPM were obtained, respectively.

Surface tension testing for the composition of the invention was performed following the procedure of ISO 304:1985 EEC A.5 "Surface tension"; IA/L/066, 2nd edition. The surface tension for a solution with a concentration of 0.5% w/w is 29.6 mN/m, while for the concentrate it is 22.9 mN/m.

### Example 3

Storage stability tests of the composition carried out using standard procedures of the prior art at a temperature of 20°C did not show changes in the content of active substances present in the composition of the invention.

**Table 2. The content of active substances in the composition: baseline and after two years of storage at 20°C.**

| Parameter | Method | Baseline content | | After 2 years of storage at 20°C | |
|---|---|---|---|---|---|
| | | [%] | [g/l] | [%] | [g/l] |
| Iodosulfuron-methyl-sodium content | IA/L/056, 2nd edition | 0.92 | 9.62 | 0.88 | 9.20 |
| 2,4 D content | IA/L/058, 2nd edition | 23.92 | 250.04 | 23.95 | 250.33 |

**Table 3. Physicochemical data of the composition: baseline and after 2 years of storage at 20°C.**

| Parameter | Baseline data | After 2 years of storage at 20°C |
|---|---|---|
| State of matter, colour | Homogeneous, beige liquid with a typical, faint odour | Homogeneous, beige liquid with a typical, faint odour |
| pH | 6.3 | 5.8 |
| Relative density | 1.0453 g/ml | 1.0452 g/ml |
| Dispersion stability | 0.33% (w/v) | 0.33% (w/v) |

### Example 4

The field tests were carried out according to GEP (Good Experimental Practice) principles and in accordance with the relevant EPPO guidelines: EPPO PP 1/93 (3), EPPO PP 1/135 (4), EPPO PP 1/152 (4), EPPO PP 1/181 (4), plus EPPO PP 1/225 (2) for rates of 0.8 and 1 l per hectare, respectively, with the amount of water: 200-300 l/ha, with recommended medium droplet spraying and recommended single application per season in spring in 2-4 leaf stage.

During field tests, optimal spraying rates per hectare were found for the following weeds:
Weeds sensitive to the agent at a rate of 0.8 l/ha: volunteer rapeseed (BRSNW), shepherd's purse (CAPBP), cornflower (CENCY), lamb's quarters (CHEAL), catchweed bedstraw (GALAP), henbit dead-nettle (LAMAM), red dead-nettle (LAMPU), chamomile (MATCH), scentless mayweed (MATIN), common poppy (PAPRH), chickweed (STEME).
Weeds sensitive to the agent at a rate of 1 l/ha: common windgrass (APESV), volunteer rapeseed (BRSNW), shepherd's purse (CAPBP), cornflower (CENCY), lamb's quarters (CHEAL), catchweed bedstraw (GALAP), small-flowered crane's-bill (GERPU), henbit dead-nettle (LAMAM), red dead-nettle (LAMPU), chamomile (MATCH), scentless mayweed (MATIN), common poppy (PAPRH), black-bindweed (POLCO), chickweed (STEME), field pennycress (THLAR), birdeye speedwell (VERPE), field pansy (VIOAR).
Weeds moderately sensitive to the agent at a rate of 0.8 l/ha: common windgrass (APESV), small-flowered crane's-bill (GERPU), black-bindweed (POLCO), field pennycress (THLAR), birdeye speedwell (VERPE), field pansy (VIOAR).
Weeds moderately sensitive to the agent at a rate of 1 l/ha: ivy-leaved speedwell (VERHE)
Weeds moderately resistant to the agent at a rate of 0.8 l/ha: ivy-leaved speedwell (VERHE).

## Claims

1. A herbicide composition in the form of an oil suspension for dilution with water intended for the control of annual and perennial plants comprising 2-ethylhexyl 2,4-dichlorophenoxyacetate, a sodium salt of methyl 4-iodo-2-[3-(4-methoxy-6-methyl-1,3,5-triazin-2-yl)ureidosulfonyl]benzoate (iodosulfuron-methyl-sodium), **characterised in that** the 2-ethylhexyl 2,4-dichlorophenoxyacetate is present in an amount within the range of from 34% w/w to 37% w/w, while the sodium salt of methyl 4-iodo-2-[3-(4-methoxy-6-methyl-1,3,5-triazin-2-yl)ureidosulfonyl]benzoate (iodosulfuron-methyl-sodium) is present in an amount within the range of from 0.8 to 1.2% w/w, based on the density of the composition of 1.0453 g/ml; wherein the composition further comprises the components listed in Table 1 in the amounts indicated therein expressed in % w/w based on the density of the composition of 1.0453 g/ml.

2. The composition of claim 1, **characterised in that** its viscosity is within the range of from 339.8 to 360.7 mPas at 20°C.

3. A method for preparing the herbicide composition as defined in any one of claims from 1 to 3, **characterised in that** it comprises the steps of:
• stirring rapeseed oil, 2-ethylhexyl 2,4-dichlorophenoxyacetate in an amount within the range of from 34% w/w to 37% w/w, at least one organic polysiloxane, dioctyl sodium sulfosuccinate, at least one preparation comprising ethoxylated castor oil, cloquintocet mexyl, silicon dioxide, urea, sodium salt of methyl 4-iodo-2-[3-(4-methoxy-6-methyl-1,3,5-triazin-2-yl)ureidosulfonyl]benzoate (iodosulfuron-methyl-sodium) in an amount within the range of from 0.8 to 1.2 % w/w to obtain a homogeneous composition, wherein during stirring the mixture was cooled so that the temperature was lower than 35°C, then
• grinding the mixture in a ball mill to obtain particles with Dv (50) <2 µm at a temperature below 35°C, followed by
• cooling the mixture to room temperature;
wherein the remaining components were mixed in amounts expressed in % w/w as specified in Table 1.
